# EUROPÄISCHE PATENTSCHRIFT

(11) **EP 3 542 076 B1**
(45) Veröffentlichungstag und Bekanntmachung des Hinweises auf die Patenterteilung: **22.03.2023**
(21) Anmeldenummer: 17804523.3
(22) Anmeldetag: 21.11.2017
(51) Int. Cl.: F16B 25/00, F16B 25/10, B21H 3/02, B21K 1/56

(54) **HOLZSCHRAUBE UND VERFAHREN ZUM HERSTELLEN EINER HOLZSCHRAUBE**
WOOD SCREW AND METHOD FOR PRODUCING A WOOD SCREW
VIS À BOIS ET PROCÉDÉ DE FABRICATION D'UNE VIS À BOIS

(30) Priorität: 21.11.2016 DE 102016222937
(43) Veröffentlichungstag der Anmeldung: 25.09.2019
(73) Patentinhaber: SWG Schraubenwerk Gaisbach GmbH, 74638 Waldenburg (DE)
(72) Erfinder: ROLL, Patrick, 74523 Schwäbisch Hall (DE); GLATTBACH, Joachim, 74629 Pfedelbach (DE)
(74) Vertreter: Patentanwälte Ruff, Wilhelm, Beier, Dauster & Partner mbB
(86) Internationale Anmeldenummer: PCT/EP2017/079903
(87) Internationale Veröffentlichungsnummer: WO 2018/091732

(56) Entgegenhaltungen:
- DE-A1- 2 751 407
- DE-A1- 2 811 567
- DE-A1- 3 635 474
- GB-A- 2 101 022
- US-A- 3 738 218
- US-A1- 2003 235 482

## Beschreibung

Die Erfindung betrifft eine Holzschraube mit einem Schraubenkopf mit einer Antriebsausbildung, einem von dem Schraubenkopf ausgehenden Schraubenschaft, der wenigstens abschnittsweise mit einem Gewinde versehen ist, und einer sich an das Gewinde anschließenden Bohrspitze. Die Erfindung betrifft auch ein Verfahren zum Herstellen einer erfindungsgemäßen Holzschraube.

Im professionellen Holzbau setzen sich zunehmend Schrägverschraubungen durch, bei denen Holzschrauben schräg zu einer Oberfläche eines Holzelements, in das die Schrauben eingeschraubt werden sollen, angesetzt und dann eingeschraubt werden. Solche Schrägverschraubungen haben in Bezug auf eine Kraftübertragung mittels der Schrauben erhebliche Vorteile, insbesondere bei Verwendung von sogenannten Vollgewindeschrauben, die ein von der Unterseite des Schraubenkopfes bis zu einer Schraubenspitze durchgehendes Gewinde aufweisen. Bei sehr flachen Winkeln, unter denen eine Schraube bei einer Schrägverschraubung angesetzt wird, kann das sogenannte Anpacken, also das Eindringen der Schraube in das Holzelement, bis das Gewinde der Schraube greift, problematisch sein.

Aus der deutschen Offenlegungsschrift DE 36 35 474 A1 ist eine Schraube mit selbstschneidendem Gewinde und einer Bohrspitze bekannt. Die Bohrspitze ist mit geradlinigen Schneidkanten 9 versehen, an die sich gewölbte Schneidflächen 6 anschließen. Die Schneidkanten 9 verlaufen ausgehend von der Bohrspitze in einem Winkel zueinander.

Aus der deutschen Offenlegungsschrift DE 28 11 567 A1 ist eine Bohrschraube mit einem selbstschneidenden Gewinde und einer Bohrspitze bekannt. Die Bohrspitze weist geradlinige Schneidkanten 28, 30 auf, an die sich gewölbte Flächen anschließen.

Aus der US-Patentschrift US 3,738,218 ist eine weitere Bohrschraube bekannt, die ein selbstschneidendes Gewinde und eine Bohrspitze aufweist. Ausgehend von einer Schraubenspitze geht eine geradlinige Schneidkante 50 aus. Die geradlinige Schneidkante endet am Übergang von der Bohrspitze zu einem zylindrischen, aber noch nicht mit Gewinde versehenen Abschnitt. In diesem zylindrischen Abschnitt ist eine gekrümmte Schneidkante vorgesehen, die sich bis zum Beginn des Gewindes erstreckt.

Aus der deutschen Offenlegungsschrift DE 27 51 407 A1 ist eine Bohrschraube mit selbstschneidendem Gewinde und Bohrspitze bekannt. Die Bohrspitze weist eine zunächst zylindrische und sich dann abgerundet zu einer Spitze verjüngende Bohrspitze auf. In dieser Bohrspitze sind Ausnehmungen vorgesehen, um Schneidkanten auszubilden. Die Schneidkanten laufen im zylindrischen Teil der Bohrspitze zunächst parallel zur Schraubenlängsachse und gehen dann in einen Radius über, der bis zur Spitze der Bohrspitze reicht. In einer Seitenansicht der Bohrspitze ist zu erkennen, dass die Schneidkante innerhalb einer radial zur Schraubenlängsachse verlaufenden und die Schraubenlängsachse einschließenden Ebene liegt.

In der britischen Offenlegungsschrift GB 2 101 022 A ist die Herstellung einer Bohrschraube mit selbstschneidendem Gewinde und Bohrspitze beschrieben.

Aus der US-Offenlegungsschrift US 2003/235482 A1 ist eine Holzschraube mit einem Schraubenkopf mit einer Antriebsausbildung, einem von dem Schraubenkopf ausgehenden Schraubenschaft, der wenigstens abschnittsweise mit einem Gewinde versehen ist, und einer an dem, dem Schraubenkopf gegenüberliegenden Ende des Schraubenschafts angeordneten Bohrspitze bekannt. Im Bereich des Schraubenschafts ist ein Befestigungsgewinde vorgesehen. Im Bereich der Bohrspitze geht das Befestigungsgewinde in zwei Längsschneiden über, die bis zu einem Endpunkt der Bohrspitze durchgehen, so dass die Bohrspitze gewindefrei ausgebildet ist. Die Längsschneiden verlaufen in Bezug auf eine Mittellängsachse der Holzschraube abschnittsweise gekrümmt. Ein Umfang der Bohrspitze weist zwischen den beiden Längsschneiden keine weiteren Schneiden auf. Die beiden Schneiden laufen ausgehend von der Wendelform des Befestigungsgewindes am schaftseitigen Beginn der Bohrspitze noch wendelartig und gehen dann in einen nicht mehr wendelartigen geradlinigen Verlauf über.

Mit der Erfindung soll eine Holzschraube in Bezug auf ihr Ansetzverhalten verbessert werden.

Erfindungsgemäß ist hierzu eine Holzschraube mit den Merkmalen von Anspruch 1 vorgesehen.

Das Vorsehen einer Bohrspitze mit lediglich zwei Längsschneiden, die gekrümmt verlaufen und bis zu einem Endpunkt der Bohrspitze durchgehen, verbessert das sogenannte Ansetzen oder Anpacken der Bohrspitze beim Aufsetzen auf die Oberfläche eines Holzelements erheblich, insbesondere auch beim schrägen Aufsetzen im Rahmen einer Schrägverschraubung. Die erfindungsgemäße Holzschraube weist dabei erhebliche Vorteile auch gegenüber handelsüblichen Holzspiralbohrern auf, die beim schrägen Anbohren einer Holzoberfläche in der Regel verlaufen oder auf der Holzoberfläche rattern, bis eine Vertiefung zum korrekten Ansetzen des Bohrers geschaffen ist. Die erfindungsgemäße Holzschraube zeichnet sich dahingegen durch ein problemloses Eindringen in eine Holzoberfläche auch bei schrägem Ansetzen, auch bei vergleichsweise kleinen Winkeln, sogar weniger als 45°, aus. Die Bohrspitze endet beispielsweise am Beginn des Gewindes auf dem Schaft. Dieser Übergang kann am Beginn des zylindrischen Gewindes auf dem Schaft liegen. Durch das Walzen des Gewindes nach dem Kneifen der Bohrspitze kann sich aber auch ein Übergangsbereich zwischen dem Beginn des zylindrischen Gewindes und der gewindefreien Bohrspitze ausbilden. Dieser Übergangsbereich weist dann beispielsweise Abschnitte eines Gewindegangs und gegebenenfalls Abschnitte der Längsschneiden auf. Der Übergangsbereich kann eine sich zur Bohrspitze hin verjüngende, eine zylindrische oder auch eine abschnittsweise sich verjüngende und abschnittsweise zylindrische Grundform aufweisen. Zwischen dem schaftseitigen Ende der Bohrspitze und dem Beginn des Gewindes auf dem Schaft kann auch ein gewindefreier Bereich liegen.

In Weiterbildung der Erfindung verlaufen die Längsschneiden stetig und ohne Unterbrechungen und Ecken.

Ein solcher Verlauf der Längsschneiden begünstigt das rasche Eindringen in eine Holzoberfläche beim Schrägverschrauben.

In Weiterbildung der Erfindung gehen die Längsschneiden über die gesamte Länge der Bohrspitze bis zu deren Endpunkt durch.

Auf diese Weise können die Längsschneiden für ein problemloses Ansetzen der Schraube und dann auch für den Einzug der Schraube in das Holzmaterial bis zu dem Punkt sorgen, an dem dann das Gewinde in das Holzmaterial eingreift und die Schraube weiter in das Holzmaterial hineinzieht.

Es hat sich herausgestellt, dass ein wendelartiger Verlauf der beiden Längsschneiden das sogenannte Anpacken der Schraube beim Ansetzen, insbesondere beim Schrägverschrauben, gegenüber einer geradlinigen Ausbildung der Längsschneiden erheblich verbessert.

In Weiterbildung der Erfindung laufen die Längsschneiden in Umfangsrichtung und über die Länge der Bohrspitze gesehen jeweils über maximal ein Viertel, insbesondere maximal eine Hälfte des Umfangs der Bohrspitze.

Die Längsschneiden schließen dadurch mit der Mittellängsachse der Holzschraube einen vergleichsweise kleinen Winkel ein und sorgen dadurch für einen schnellen Einzug der Bohrspitze in das Holzmaterial. Die Längsschneiden stellen zwar kein Gewinde dar, haben aber durch die wendelartige Ausbildung eine gewindeähnliche Wirkung und sorgen dadurch für ein rasches Anpacken der Schraube und für das problemlose Ausbilden einer Anfangsvertiefung, in die dann das Gewinde der Schraube eingreifen kann.

In Weiterbildung der Erfindung verlaufen die Längsschneiden in einer Einschraubrichtung des Gewindes gesehen über die gesamte Länge der Bohrspitze nach außen gekrümmt.

In Weiterbildung der Erfindung verlaufen die Längsschneiden in einer Einschraubrichtung des Gewindes gesehen über die gesamte Länge der Bohrspitze nach innen gekrümmt.

In Weiterbildung der Erfindung weisen die Längsschneiden der Bohrspitze in einer Richtung senkrecht zur Mittellängsachse gesehen ausgehend vom Endpunkt eine nach innen gekrümmte Kontur auf.

Durch eine solche nach innen gekrümmte Kontur wird ein problemloses Ansetzen und Anpacken der Schraube beim Schrägverschrauben erheblich verbessert. Betrachtet werden dabei die Längsschneiden senkrecht zu einer Ebene, in der der größte Abstand der Längsschneiden zueinander liegt. Mit anderen Worten werden die Längsschneiden dabei senkrecht zu einer Kneifebene betrachtet, in der also die Längsschneiden beim Herstellen der Bohrspitze mit zwei senkrecht zu der Kneifebene aufeinander zulaufenden Kneifbacken hergestellt werden.

In Weiterbildung der Erfindung weisen die Längsschneiden der Bohrspitze in einer Richtung senkrecht zur Mittellängsachse gesehen ausgehend vom Übergang zu dem Gewinde eine nach außen gekrümmte Kontur auf.

Eine solche nach außen gekrümmte Kontur kurz vor bzw. bis zum Übergang in das Gewinde sorgt für einen problemlosen und für einen Bediener nicht spürbaren Übergang, wenn beim Einschrauben der Holzschraube das Gewinde in die von der Bohrspitze ausgebildete Vertiefung eingreift.

In Weiterbildung der Erfindung geht ausgehend vom Gewinde zum Endpunkt der Bohrspitze hin die nach außen gekrümmte Kontur der Längsschneiden nach einem Viertel, insbesondere einem Drittel, der Länge der Bohrspitze in die nach innen gekrümmte Kontur der Längsschneiden über.

In Weiterbildung der Erfindung schließen die Längsschneiden am Endpunkt der Bohrspitze einen Winkel von 20° bis 90°, insbesondere 30° bis 60°, ein.

Ein solcher Winkel zwischen den Längsschneiden von weniger als 90° verbessert das Ansetzen bzw. Anpacken der Holzschraube bei einer Schrägverschraubung.

In Weiterbildung der Erfindung bleibt der Winkel, den die Längsschneiden einschließen, ausgehend von dem Endpunkt der Bohrspitze bis zu einem Viertel, insbesondere einem Drittel, der Länge der Bohrspitze im Wesentlichen konstant.

In Weiterbildung der Erfindung weist die Bohrspitze in Schnittebenen, die senkrecht zur Mittellängsachse der Schraube verlaufen, einen am Übergang von der Bohrspitze zum Gewinde zunächst kreisartigen Querschnitt und dann bis zur Endspitze einen S-artigen Querschnitt auf, wobei die beiden Eckpunkte des S-artigen Querschnitts durch die Längskanten definiert sind.

Die erfindungsgemäße Holzschraube weist somit eine gegenüber bekannten Bohrspitzen oder Bohrern grundlegend anders gestaltete Bohrspitze auf. Überraschenderweise bietet eine solche Bohrspitze erhebliche Vorteile beim Einsatz einer erfindungsgemäßen Holzschraube für die Schrägverschraubung.

In Weiterbildung der Erfindung weisen die beiden Längsschneiden am schaftseitigen Ende der Bohrspitze in radialer Richtung einen Abstand voneinander auf, der dem Kerndurchmesser des Gewindes entspricht.

In Weiterbildung der Erfindung beginnt das Gewinde am schaftseitigen Ende der Bohrspitze mit einer sehr kleinen Höhe der Gewindeflanken oder einer Höhe null der Gewindeflanken.

Durch diese Maßnahmen wird das Anpacken bzw. Eingreifen des Gewindes in die von der Bohrspitze geschaffene Vertiefung beim Einschrauben der Schraube erleichtert.

Das der Erfindung zugrunde liegende Problem wird auch durch ein Verfahren zum Herstellen einer Holzschraube gelöst, bei dem das Herstellen eines Rohlings mit einem Schraubenkopf und einem Schaft, der in dem für die Bohrspitze vorgesehenen Abschnitt zylindrisch ist, dem Kneifen der Bohrspitze durch Aufeinanderzubewegen von zwei Kneifbacken unter Zwischenfügen des Schafts und, anschließend an den Kneifvorgang, das Walzen des Gewindes vorgesehen ist.

Indem das Walzen des Gewindes nach dem Kneifen der Bohrspitze erfolgt, kann der Übergangsbereich zwischen der Bohrspitze und dem Gewinde überwalzt werden, so dass die Längsschneiden auf den Kerndurchmesser des Gewindes gebracht werden, wodurch ein sanfter Übergang zwischen der Bohrspitze und dem Gewinde erzielt wird. Alternativ wird die Bohrspitze nicht überwalzt, wodurch dann ein Durchmesser der Bohrspitze am Übergang zum Gewinde größer ist als der Kerndurchmesser des Gewindes. Zwischen dem Beginn des Gewindes auf dem Schaft und der Bohrspitze kann auch ein gewindefreier Abschnitt des Schafts liegen.

In Weiterbildung der Erfindung wird ein Kneifbutzen, der beim Kneifen der Bohrspitze in einen Bereich außerhalb der Bohrspitze verdrängtes Material enthält, beim Walzen des Gewindes entfernt.

Das Entfernen des sogenannten Kneifbutzens erfolgt beim Walzen des Gewindes. Ein Kneifbutzen wird in der Regel vorgesehen, um die beiden Kneifbacken beim Kneifen der Bohrspitze nicht aufeinandertreffen zu lassen. Der Kneifbacken ist dann in der Regel mit einem sehr dünnen Steg mit den Längsschneiden verbunden und kann, gegebenenfalls auch problemlos von Hand, entfernt werden. Der zusätzliche Arbeitsschritt des Entfernens des Kneifbutzens entfällt bei dem erfindungsgemäßen Verfahren aber, da der Kneifbutzen automatisch beim Walzen des Gewindes entfernt wird.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. In den Zeichnungen zeigen:
- Fig. 1: eine Seitenansicht einer erfindungsgemäßen Holzschraube,
- Fig. 2: eine weitere Seitenansicht der erfindungsgemäßen Holzschraube, die gegenüber der Darstellung der Fig. 1 um 180° um ihre Mittellängsachse gedreht ist,
- Fig. 3: eine schematische Seitenansicht der Holzschraube der Fig. 1 in einem eingeschraubten Zustand,
- Fig. 4: eine abschnittsweise Darstellung der Holzschraube der Fig. 1, wobei die Holzschraube der Fig. 4 gegenüber der Darstellung der Fig. 1 um 90° um die Mittellängsachse verdreht ist,
- Fig. 5: eine weitere abschnittsweise Darstellung der Holzschraube der Fig. 4, wobei mehrere Schnittebenen angedeutet sind,
- Fig. 6 bis 12: Ansichten auf die in Fig. 5 eingezeichneten Schnittebenen,
- Fig. 13: eine Seitenansicht der Bohrspitze der Holzschraube der Fig. 1,
- Fig. 14 bis 16: Seitenansichten der Bohrspitze der Fig. 13 in unterschiedlichen Drehpositionen um die Mittellängsachse der Schraube,
- Fig. 17: eine Ansicht der Bohrspitze der Fig. 13 von unten auf den Endpunkt der Bohrspitze,
- Fig. 18 und 19: Ansichten der Bohrspitze der Fig. 13 von schräg vorne aus unterschiedlichen Blickwinkeln,
- Fig. 20: eine Seitenansicht einer Bohrspitze für eine Holzschraube gemäß einer weiteren Ausführungsform der Erfindung,
- Fig. 21 und 22: die Bohrspitze der Fig. 20 in Seitenansicht und in verschiedenen Drehpositionen um die Mittellängsachse der Schraube und
- Fig. 23 bis 25: perspektivische Ansichten der Bohrspitze der Fig. 20 aus verschiedenen Blickwinkeln.

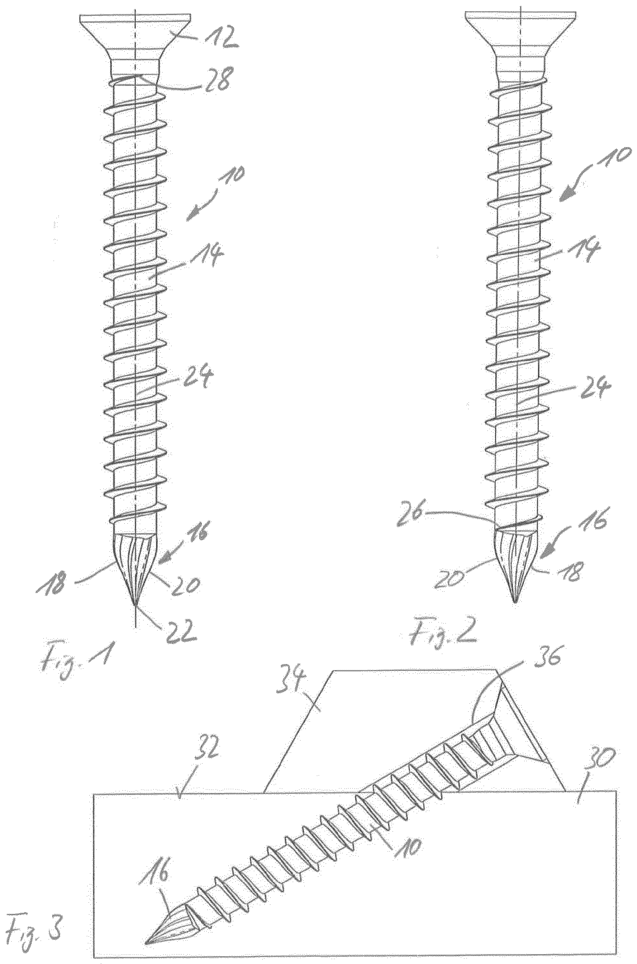

Die Darstellung der Fig. 1 zeigt in einer Seitenansicht eine erfindungsgemäße Holzschraube 10 mit einem Schraubenkopf 12 und einem von dem Schraubenkopf 12 ausgehenden Schraubenschaft 14. Der Schraubenkopf 12 weist eine in Fig. 1 nicht sichtbare Antriebsausbildung auf seiner Oberseite auf und ist bei der dargestellten Ausführungsform der Erfindung als Senkkopf ausgebildet. Prinzipiell kann der Schraubenkopf 12 beliebige Formen annehmen.

Der Schaft 14 ist mit einem Gewinde, insbesondere einem Holzgewinde versehen, das von der Unterseite des Schraubenkopfes 12 bis zum Beginn einer Bohrspitze 16 durchgeht. Die Bohrspitze 16 selbst ist gewindefrei ausgebildet und weist zwei Längsschneiden 18, 20 auf, die vom Übergang zwischen den mit dem Gewinde versehenen Schaft 14 zur Bohrspitze 16 bis zu einem Endpunkt 22 der Bohrspitze 16 durchgehen. Die Holzschraube 10 ist als Vollgewindeschraube ausgebildet.

Die Blickrichtung in Fig. 1 ist auf eine Ebene der Bohrspitze 16, in der die Längsschneiden 18, 20 den größten Abstand zueinander aufweisen.

Die Darstellung der Fig. 2 zeigt die Schraube 10 in einer weiteren Seitenansicht, wobei die Schraube 10 gegenüber der Darstellung der Fig. 1 um 180° gedreht ist. Die Bohrspitze 16 selbst ist gegenüber der Darstellung der Fig. 1 unverändert, da die Bohrspitze in Bezug auf eine Mittellängsachse 24 der Schraube 10 achsensymmetrisch ausgebildet ist. Die gegenüber der Fig. 1 veränderte Drehlage um die Mittellängsachse 24 ist an einem Vergleich des Beginns 26 des Gewindes am Übergang zwischen dem Gewinde und der Bohrspitze 16 zu erkennen. In Fig. 2 ist dieser Beginn 26 zu erkennen und es ist auch zu erkennen, dass das Gewinde auf dem Schaft 14 am Übergang von der Bohrspitze 16 zum Gewinde mit einer Flankenhöhe von null oder einer sehr kleinen Flankenhöhe beginnt.

In Fig. 1 ist dahingegen zu erkennen, dass das Gewinde an der Unterseite des Kopfes 12 ein Ende 28 aufweist, an dem die Flankenhöhe ebenfalls im Wesentlichen null beträgt.

Die Darstellung der Fig. 3 zeigt eine schematische Darstellung der Holzschraube 10 im eingeschraubten Zustand. Die Holzschraube 10 ist in ein Holzbauteil 30 eingeschraubt und auf einer Oberfläche 32 des Holzbauteils 10 ist mittels der Holzschraube 10 ein Beschlagteil 34 befestigt. Das Beschlagteil 34 dient zur formschlüssigen Befestigung eines nicht dargestellten weiteren Beschlagteils.

Die Holzschraube 10 ist schräg zur Oberfläche 32 des Holzbauteils 30 eingeschraubt. Dies verbessert die Festigkeit der Verbindung zwischen dem Beschlagteil 34 und dem Holzbauteil 30, da es durch die Schrägverschraubung der Holzschraube 10 möglich ist, diese bei einer Belastung des Beschlagteils 34 und des Holzbauteils 30 auch auf Zug zu belasten.

Das Beschlagteil 34 weist einen Schraubkanal 36 auf, der schräg zu einer Oberseite und einer Unterseite des Beschlagteils 34 verläuft. Wenn die Holzschraube 10 in den Schraubkanal 36 eingeführt und dann in Drehung versetzt wird, muss die Bohrspitze 16 somit aus einer schräg angesetzten Lage in das Holzbauteil 30 eindringen. Bei einer solchen Schrägverschraubung, im Übrigen auch bei einer Schrägverschraubung der Holzschraube 10 ohne Benutzung des Beschlagteils 34, beispielsweise wenn die Holzschraube 10 schräg durch zwei aufeinander aufliegende Holzbauteile geschraubt wird, erleichtert die erfindungsgemäße Ausgestaltung der Bohrspitze 16 das sogenannte Anpacken der Holzschraube 10, also das Eingreifen der Bohrspitze 16 und nachfolgend des Gewindes in das Material des Holzbauteils 30. Speziell sitzt zunächst lediglich der Endpunkt 22 der Bohrspitze 16 auf der Oberfläche 32 auf. Sobald die Holzschraube 10 in Drehung versetzt und gleichzeitig parallel zu ihrer Mittellängsachse 24 in Richtung auf das Holzbauteil 30 gedrückt wird, greifen die beiden Längsschneiden 18, 20, die bis zum Endpunkt 22 der Bohrspitze 16 durchgehen, in das Material des Holzbauteils 30 ein und schaffen in der Oberfläche 32 eine Vertiefung. Durch die sich ausgehend vom Endpunkt 22 erweiternde Form der Bohrspitze 16 und die auseinanderlaufenden Längsschneiden 18, 20 wird diese Vertiefung erweitert und vertieft, bis der Anfang 26 des Gewindes in die so geschaffene Vertiefung eingreift und bei weiterer Drehung der Schraube 10 diese dann in das Material des Holzbauteils 30 hineinbewegen kann. Die Längsschneiden 18, 20 sorgen dabei beim Vordringen in das Material des Holzbauteils 30 auch für eine gegenüber konventionellen Holzschrauben verringerte Spaltneigung des Holzes.

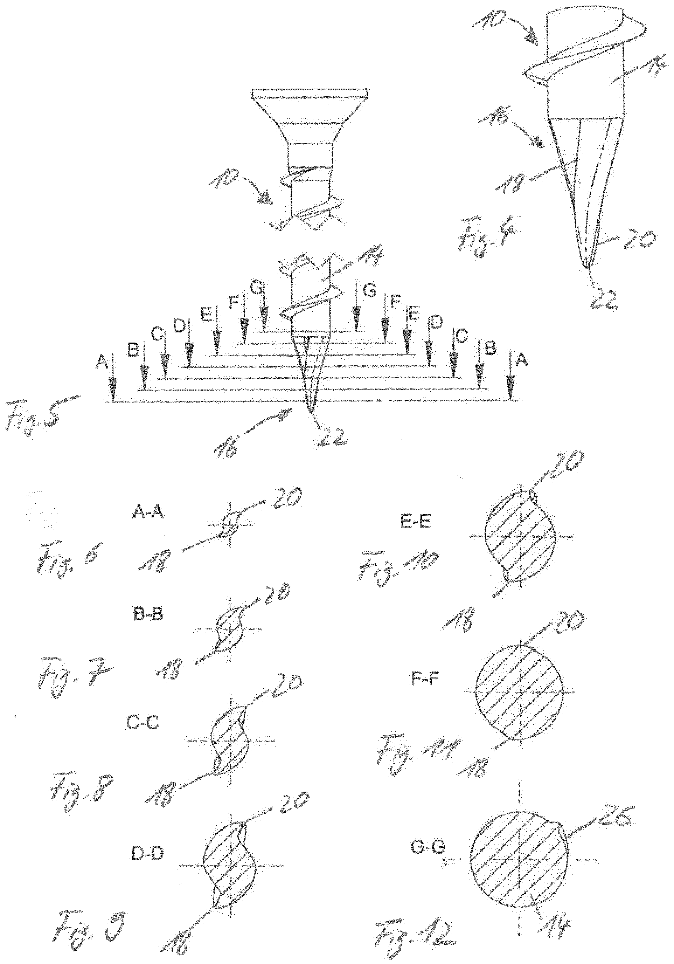

Die Darstellung der Fig. 4 zeigt die Holzschraube 10 abschnittsweise und lediglich im Bereich der Bohrspitze 16 und des Übergangs zum Schaft 14. Die Schraube 10 ist gegenüber der Darstellung der Fig. 1 und der Fig. 2 dabei um jeweils 90° gedreht. In der Darstellung der Fig. 4 ist dadurch lediglich die Längsschneide 18 in voller Länge zu erkennen, wohingegen die Längsschneide 20 größtenteils verdeckt und lediglich in dem unmittelbar an den Endpunkt 22 der Bohrspitze 16 anschließenden Bereich zu erkennen ist.

Die Darstellung der Fig. 5 zeigt abschnittsweise die Holzschraube 10 in derselben Drehposition wie Fig. 4. Fig. 5 dient zur Verdeutlichung der Lage von Schnittebenen A-A, B-B, C-C, D-D, E-E, F-F und G-G senkrecht zur Mittellängsachse 24 der Holzschraube 10. Die Schnittebene A-A liegt dabei vom Endpunkt 22 der Bohrspitze 26 ein Stück weit entfernt. Die Schnittebene F-F liegt noch innerhalb des Bereichs der Bohrspitze 16, wohingegen die Schnittebene G-G bereits im Bereich des Schafts 14 angeordnet ist.

Anhand der Schnittansichten der Fig. 6 bis 12 ist die Veränderung des Querschnitts der Bohrspitze 16 in den Schnittebenen senkrecht zur Mittellängsachse 24 zu erkennen.

Bereits in der Schnittebene A-A, also bereits kurz nach dem Endpunkt 22 der Bohrspitze 16, sind die beiden Längsschneiden 18, 20 an der Bohrspitze 16 voll ausgeprägt. Die Längsschneiden 18, 20 laufen bei der erfindungsgemäßen Holzschraube 10 ja bis zum Endpunkt 22 der Bohrspitze 16 durch. Die Längsschneiden 18, 20 sind dabei im Bereich der Schnittebene A-A durch zwei aufeinanderstoßende Flächen gebildet, die zwischen sich einen Winkel von weniger als 45° einschließen.

Die Darstellung der Fig. 7 zeigt die Ansicht auf die Schnittebene B-B. Es ist dabei festzustellen, dass die Ansicht auf die Schnittebenen A-A, B-B, C-C, D-D, E-E, F-F und G-G nicht unter einem konstanten Drehwinkel erfolgt. Die beiden Längsschneiden 18, 20 laufen jeweils wendelartig über die Länge der Bohrspitze 16. Die Schnittansichten der Fig. 6 bis 12 sind hingegen jeweils unter einer geringfügig verdrehten Betrachtungsposition dargestellt.

In der Schnittebene B-B ist der Abstand der beiden Längsschneiden 18, 20 zueinander angewachsen. Die Querschnittsform der Bohrspitze 16 ist aber unverändert etwa S-förmig, wobei die beiden Eckpunkte dieser Querschnittsform durch die Längsschneiden 18, 20 definiert sind. Bereits anhand der Ansichten der Fig. 6 und 7 ist zu erkennen, dass an der Bohrspitze 16 lediglich die beiden Längsschneiden 18, 20 ausgebildet sind, der übrige Umfang der Bohrspitze 16 aber keine weiteren Schneiden aufweist. Der Umfang zwischen den beiden Längsschneiden 18, 20 ist teilweise konvex und teilweise konkav gekrümmt ausgebildet. Auch in der Schnittebene B-B werden die Längsschneiden 18, 20 durch zwei aufeinanderstoßende Flächen gebildet, die einen Winkel von weniger als 45° einschließen.

Fig. 8 zeigt eine Ansicht auf die Schnittebene C-C in Fig. 5 und Fig. 9 eine Ansicht auf die Schnittebene D-D in Fig. 5. Es ist zu erkennen, dass sich die beiden Längsschneiden 18, 20 mit zunehmendem Abstand von dem Endpunkt 22 der Bohrspitze 16 voneinander entfernen, der Querschnitt der Bohrspitze 16 aber unverändert etwa S-artig bleibt, wobei die Eckpunkte durch die Längsschneiden 18, 20 definiert sind. Auch in den Schnittebenen C-C und D-D sind die Längsschneiden 18, 20 durch Flächen geildet, die einen Winkel von weniger als 45° einschließen.

Fig. 10 zeigt eine Ansicht auf die Schnittebene E-E in Fig. 5. Wieder sind die Längsschneiden 18, 20 zu erkennen, die nun aber durch zwei aneinanderstoßende Flächen gebildet sind, die einen Winkel von mehr als 90° zueinander einnehmen. Infolgedessen sind die Längsschneiden 18, 20 in der Schnittebene E-E bereits vergleichsweise stumpf ausgebildet und in der Schnittebene E-E beginnt bereits der Übergang in den kreisrunden Querschnitt des Schafts 14.

Fig. 11 zeigt eine Ansicht auf die Schnittebene F-F in Fig. 5. Die Längsschneiden 18, 20 sind noch zu erkennen, bilden aber lediglich noch einen abgerundeten Vorsprung. Während der S-artige Querschnitt in der Schnittebene E-E noch zu erkennen war, nimmt der Querschnitt der Bohrspitze 16 in der Schnittebene F-F die Form eines deformierten Kreises an. Diese Veränderung der Querschnittsform der Bohrspitze 16 wird erfindungsgemäß realisiert, um einen sanften Übergang von dem S-artigen Querschnitt der Bohrspitze 16 zu dem kreisförmigen Querschnitt des Schafts 14 zu schaffen.

Fig. 12 zeigt eine Ansicht auf die Schnittebene G-G im Bereich des Schafts 14. Zu erkennen ist hier bereits der Beginn 26 des Gewindes und der im Querschnitt kreisförmige Schaft 14. Am Beginn 26 des Gewindes weist dieses eine Flankenhöhe von null auf. Das Gewinde greift dadurch zuverlässig in die von der Bohrspitze 16 geschaffene Vertiefung ein.

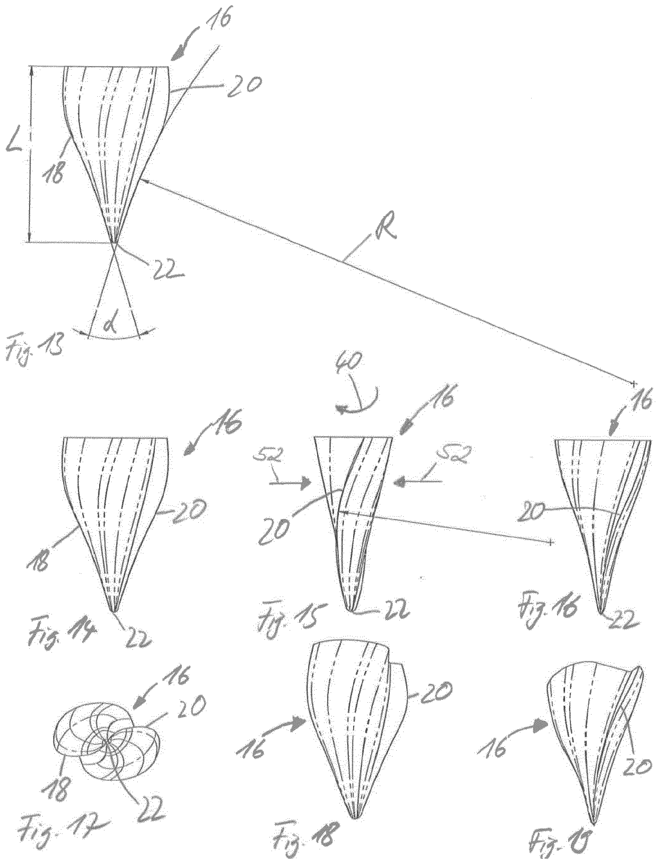

Die Darstellung der Fig. 13 zeigt lediglich die Bohrspitze 16 der Holzschraube 10 der Fig. 1 bis zu deren Ende. Der Schaft 14 der Schraube 10 ist hingegen nicht dargestellt. Die Bohrspitze 16 weist eine Länge L auf, die größer ist als der Kerndurchmesser des Schafts 14. Vorteilhafterweise beträgt die Länge der Bohrspitze 16 etwa das 1,1- bis 3-Fache des Kerndurchmessers des Schafts 14. Die Bohrspitze 16 endet bei der dargestellten Ausführungsform am Übergang in den zylindrischen Gewindeteil des Schaftes. Durch das Überwalzen der Bohrspitze beim Herstellen des Gewindes kann sich auch ein Übergangsbereich ausbilden, in dem Abschnitte von Gewindegängen und/oder Abschnitte der Längsschneiden vorhanden sind. Der Übergangsbereich kann dann eine sich zur Bohrspitze hin verjüngende und/oder zylindrische Grundform haben.

Die Drehposition der Bohrspitze 16 entspricht der Position der Fig. 1. In dieser Ansicht weisen die Längsschneiden 18, 20 in der Zeichenebene den größten Abstand zueinander auf.

Es ist in dieser Ansicht zu erkennen, dass die beiden Längsschneiden 18, 20 ausgehend vom Endpunkt 22 einen Winkel α einschließen. Dieser Winkel α liegt erfindungsgemäß zwischen 20° und 90°, insbesondere zwischen 30° und 60°. Bei der Ausführungsform der Fig. 13 beträgt der Winkel α etwa 30°. Auch dann, wenn die Holzschraube 10 unter einem sehr flachen Winkel auf eine Holzoberfläche aufgesetzt wird, sorgt ein solcher Winkel zwischen den Längsschneiden 18, 20 anschließend an den Endpunkt 22 der Bohrspitze 16 für ein zuverlässiges Anpacken und Eindringen der Bohrspitze 16 und der Holzschraube 10 in das Material eines Holzbauteils.

Es ist in der Darstellung der Fig. 13 auch zu erkennen, dass der Winkel α, den die Längsschneiden 18, 20 ausgehend von dem Endpunkt 22 der Bohrspitze 16 einschließen, bis zu etwa einem Viertel der Länge der Bohrspitze 16 konstant bleibt und dann allmählich größer wird. Zum Ende der Bohrspitze 16 hin, in Fig. 13 also in Richtung nach oben, nimmt der zwischen den Längsschneiden 18, 20 eingeschlossene Winkel dann allmählich wieder ab, bis diese annähernd parallel zueinander laufen und dann in den Kern des Schafts 14 übergehen.

In der Darstellung der Fig. 13 ist mittels eines Radius R angedeutet, dass die Längsschneiden 18, 20 ausgehend vom Endpunkt 22 der Bohrspitze 16 eine nach innen gekrümmte Kontur aufweisen, in der Darstellung der Fig. 13 also konkav gekrümmt sind. Nach etwa einem Drittel der Länge der Bohrspitze 16 geht diese konkave Krümmung in eine nach außen gerichtete Krümmung, also eine konvexe Krümmung über. Diese konvexe Krümmung verläuft dann etwa bis zum Übergang in den Kern des Schafts 14. Auch durch diese Formgebung wird ein zuverlässiges Ansetzen und Anpacken der Holzschraube 10 beim Schrägverschrauben erzielt.

Die Darstellung der Fig. 14 zeigt eine der Ansicht der Fig. 13 entsprechende Darstellung der Bohrspitze 16. Fig. 15 zeigt eine Darstellung der Bohrspitze 16 in einer gegenüber der Darstellung der Fig. 14 um 90° gedrehten Drehposition um die Mittellängsachse 24 der Schraube 10. In dieser Ansicht ist zu erkennen, dass die Längsschneide 20 in einer vorgesehenen Drehrichtung der Schraube, die in Fig. 15 mittels eines gekrümmten Pfeils 40 angedeutet ist, nach außen gekrümmt ist. Die Längsschneide 18 ist in gleicher Weise ausgebildet, in der Ansicht der Fig. 15 aber verdeckt.

Fig. 16 zeigt die Bohrspitze 16 der Fig. 14 und 15 in einer gegenüber der Drehstellung der Fig. 14 um etwa 45° verdrehten Position. Zu erkennen ist hier wieder die Längsschneide 20 und es ist auch der wendelartige Verlauf der Längsschneide 20 ausgehend vom Endpunkt 22 der Bohrspitze 16 bis zum Übergang in den Kern des Schafts 14 zu erkennen. Wie bereits ausgeführt wurde, ist die Längsschneide 18 in gleicher Weise ausgebildet und angeordnet wie die Längsschneide 20, in der Darstellung der Fig. 16 aber verdeckt.

Fig. 17 zeigt eine Ansicht auf die Bohrspitze 16 der Fig. 14 von unten, also auf den Endpunkt 22 der Bohrspitze 16. In dieser Darstellung ist der wendelförmige Verlauf der Längsschneiden 18, 20 gut zu erkennen und es ist auch gut zu erkennen, dass der Umfang zwischen den beiden Längsschneiden 18, 20 keine weiteren Schneiden aufweist.

Die Darstellungen der Fig. 18 und 19 zeigen perspektivische Ansichten der Bohrspitze 16 aus jeweils unterschiedlichen Blickwinkeln.

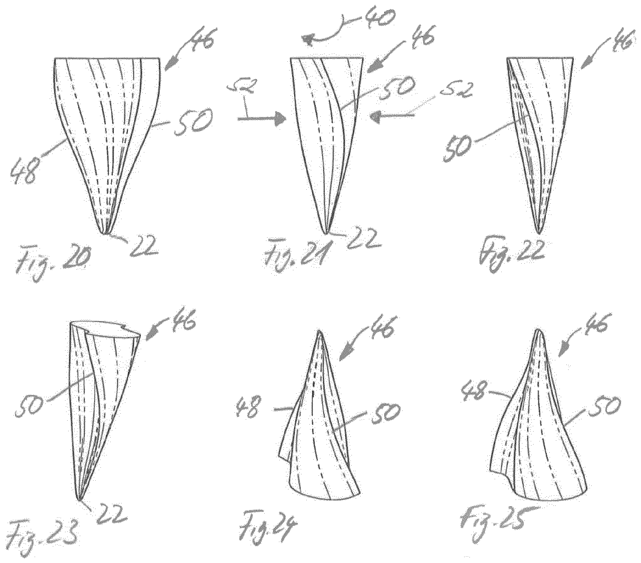

Die Darstellungen der Fig. 20 bis 25 zeigen eine Bohrspitze 46 für eine Holzschraube 10 gemäß einer weiteren Ausführungsform der Erfindung. Die Bohrspitze 46 kann anstelle der Bohrspitze 16 an der Holzschraube 10 der Fig. 1 angeordnet werden. Die Bohrspitze 46 der Fig. 20 bis 25 unterscheidet sich von der Bohrspitze 16 durch die Krümmung ihrer Längsschneiden 48, 50. Speziell sind die Längsschneiden 48, 50 der Bohrspitze 46 in der vorgesehenen Drehrichtung 40 der Holzschraube 10 gesehen nach innen oder konkav gekrümmt. Dies ist gut in der Seitenansicht der Fig. 21 zu erkennen. Die Längsschneide 50 ist hier deutlich sichtbar nach innen gekrümmt.

Fig. 22 zeigt eine weitere Seitenansicht der Bohrspitze 46 in einer veränderten Drehposition. Wieder ist die nach innen gekrümmte Ausbildung der Längsschneide 50 zu erkennen. Die Längsschneide 48 ist in gleicher Weise ausgebildet, in der Darstellung der Fig. 22 aber verdeckt.

Die Darstellungen der Fig. 23 bis 25 zeigen perspektivische Ansichten der Bohrspitze 46 aus unterschiedlichen Blickwinkeln. Die konkave Ausbildung der Längsschneiden 48, 50 ist zu erkennen. Weiter ist zu erkennen, dass auch die Längsschneiden 48, 50 bis zum Endpunkt 22 der Bohrspitze 46 durchgehen.

Sowohl die Bohrspitze 16 der Fig. 1 bis 19 und auch die Bohrspitze 46 der Fig. 20 bis 25 wird durch Kneifen hergestellt. Hierbei wird ein Rohling der Holzschraube 10, der einen Schraubenkopf und einen zylindrischen Schaft aufweist, zwischen zwei Kneifbacken angeordnet, die dann aufeinander zubewegt werden. Die Kneifbacken nehmen den Schaft in dem Endabschnitt, der für die Bohrspitze vorgesehen ist, zwischen sich auf und verformen diesen zu der Bohrspitze 16 bzw. 46. Die Darstellungen der Fig. 15 und 21 zeigen die Bohrspitze 16 bzw. 46 in einer Seitenansicht senkrecht zu einer Bewegungsrichtung der Kneifbacken aufeinander zu. In den Fig. 15 und 21 sind Pfeile 52 eingezeichnet, die die Bewegung der Kneifbacken aufeinander zu darstellen. Die beiden Kneifbacken werden dabei so aufeinander zubewegt, dass die Kneifbacken nicht unmittelbar in Kontakt miteinander gelangen. Nach dem Ausformen der Bohrspitze 16, 46 sind die Längsschneiden 18, 20 bzw. 48, 50 somit noch nicht fertiggestellt, sondern ein sogenannter Kneifbutzen ist noch mit der Bohrspitze 16, 46 an den erst später entstehenden Längsschneiden 18, 20, 48, 50 verbunden.

Der Rohling wird zusammen mit den Kneifbutzen dann weiterverarbeitet, indem das Gewinde aufgewalzt wird. Beim Aufwalzen des Gewindes wird der Kneifbutzen entfernt und die endgültige Ausbildung der Längsschneiden 18, 20, 48, 50 entsteht. Nach dem Aufwalzen des Gewindes kann noch eine weitere Oberflächenbearbeitung, beispielsweise mittels Verzinken oder dergleichen, erfolgen.

Das Aufwalzen des Gewindes sorgt nicht nur für ein Entfernen des Kneifbutzens, sondern gleichzeitig für eine Angleichung der Durchmesser der Bohrspitze 16, 46 und des Schafts 14 am Übergang zwischen Bohrspitze 16, 46 und Schaft 14. Anhand der Fig. 2 ist zu erkennen und wurde auch bereits erläutert, dass der Beginn 26 des Gewindes am Übergang zur Bohrspitze 16 eine Höhe der Gewindeflanken nahe null oder sogar gleich null aufweist. Beim Aufwalzen des Gewindes wird somit ein Durchmesser der Bohrspitze 16, und infolgedessen eine Höhe der Längsschneiden 18, 20 bzw. 48, 50, verringert, um dadurch einen sanften Übergang von der Bohrspitze 16 bzw. den Längsschneiden 18, 20, 48, 50 zu dem Beginn 26 des Gewindes auf dem Schaft 14 bereitzustellen.

## Patentansprüche

1. Holzschraube (10) mit einem Schraubenkopf (12) mit einer Antriebsausbildung, einem von dem Schraubenkopf (12) ausgehenden Schraubenschaft (14), der wenigstens abschnittsweise mit einem Gewinde versehen ist, und einer an dem, dem Schraubenkopf (12) gegenüberliegenden Ende des Schraubenschafts (14) angeordneten Bohrspitze (16; 46), wobei die Bohrspitze (16; 46) gewindefrei ausgebildet ist, wobei die Bohrspitze (16; 46) zwei Längsschneiden (18, 20; 48, 50) aufweist, die bis zu einem Endpunkt (22) der Bohrspitze (16; 46) durchgehen, wobei die Längsschneiden (18, 20; 48, 50) in Bezug auf eine Mittellängsachse (24) der Holzschraube (10) gekrümmt verlaufen, wobei ein Umfang der Bohrspitze (16; 46) zwischen den beiden Längsschneiden (18, 20; 48, 50) keine weiteren Schneiden aufweist, **dadurch gekennzeichnet, dass** die beiden Längsschneiden (18, 20; 48, 50) wendelartig bis zum Endpunkt (22) der Bohrspitze (16; 46) verlaufen und dass die Bohrspitze (16; 46) in Schnittebenen, die senkrecht zur Mittellängsachse (24) der Holzschraube (10) verlaufen, einen am Übergang zum Gewinde zunächst kreisartigen Querschnitt und dann bis zum Endpunkt (22) einen s-artigen Querschnitt aufweist, wobei die beiden Eckpunkte des s-artigen Querschnitts durch die Längsschneiden (18, 20; 48, 50) definiert sind .

2. Holzschraube nach Anspruch 1, **dadurch gekennzeichnet, dass** die Längsschneiden (18, 20; 48, 50) stetig und ohne Unterbrechungen und Ecken verlaufen.

3. Holzschraube nach Anspruch 1 oder 2, **dadurch gekennzeichnet, dass** die Längsschneiden (18, 20; 48, 50) über die gesamte Länge der Bohrspitze (16; 46) bis zu deren Endpunkt (22) durchgehen.

4. Holzschraube nach Anspruch 1, 2 oder 3, **dadurch gekennzeichnet, dass** die Längsschneiden (18, 20; 48, 50) in Umfangsrichtung und über die Länge (L) der Bohrspitze (16; 46) gesehen jeweils über maximal ein Viertel, insbesondere maximal eine Hälfte des Umfangs der Bohrspitze (16; 46) laufen.

5. Holzschraube nach wenigstens einem der vorstehenden Ansprüche, **dadurch gekennzeichnet, dass** die Längsschneiden (18, 20; 48, 50) der Bohrspitze (16; 46) in einer Richtung senkrecht zur Mittellängsachse (24) gesehen ausgehend vom Endpunkt (22) der Bohrspitze (16; 46) eine nach innen gekrümmte Kontur aufweisen.

6. Holzschraube nach wenigstens einem der vorstehenden Ansprüche, **dadurch gekennzeichnet, dass** die Längsschneiden (18, 20; 48, 50) der Bohrspitze (16; 46) in einer Richtung senkrecht zur Mittellängsachse (24) gesehen ausgehend vom Übergang zu dem Gewinde eine nach außen gekrümmte Kontur aufweisen.

7. Holzschraube nach Anspruch 5 und 6, **dadurch gekennzeichnet, dass** ausgehend von dem Gewinde zum Endpunkt (22) der Bohrspitze (16; 46) die nach außen gekrümmte Kontur der Längsschneiden (18, 20; 48, 50) nach einem Viertel, insbesondere einem Drittel, der Länge der Bohrspitze (16; 46) in die nach innen gekrümmte Kontur übergeht.

8. Holzschraube nach wenigstens einem der vorstehenden Ansprüche, **dadurch gekennzeichnet, dass** die Längsschneiden (18, 20; 48, 50) am Endpunkt (22) der Bohrspitze (16; 46) einen Winkel von 20 Grad bis 90 Grad, insbesondere 30 Grad bis 60 Grad, einschließen.

9. Holzschraube nach Anspruch 8, **dadurch gekennzeichnet, dass** der Winkel, den die Längsschneiden (18, 20; 48, 50) einschließen, ausgehend von dem Endpunkt (22) der Bohrspitze (16; 46), bis zu einem Viertel, insbesondere einem Drittel der Länge der Bohrspitze (16; 46) im Wesentlichen konstant bleibt.

10. Holzschraube nach wenigstens einem der vorstehenden Ansprüche, **dadurch gekennzeichnet, dass** am schaftseitigen Ende der Bohrspitze (16; 46) die beiden Längsschneiden (18, 20; 48, 50) in radialer Richtung einen Abstand voneinander aufweisen, der dem Kerndurchmesser des Gewindes entspricht.

11. Verfahren zum Herstellen einer Holzschraube nach wenigstens einem der vorstehenden Ansprüche, **gekennzeichnet durch** Herstellen eines Rohlings mit einem Schraubenkopf (12) und einem Schaft (14), der in dem für die Bohrspitze (16; 46) vorgesehenen Abschnitt zylindrisch ist, Kneifen der Bohrspitze (16; 46) durch aufeinander zu bewegen von zwei Kneifbacken unter Zwischenfügen des Schafts und, anschließend an den Kneifvorgang, Walzen eines Gewindes auf den Schaft (14).

12. Verfahren nach Anspruch 11, **gekennzeichnet durch** Entfernen eines Kneifbutzens, der beim Kneifen der Bohrspitze (16; 46) in einen Bereich außerhalb der Bohrspitze (16; 46) verdrängtes Material enthält, beim Walzen des Gewindes.

## Claims

1. Wood screw (10) having a screw head (12) having a drive configuration, a screw shank (14) which emanates from the screw head (12) and which at least in portions is provided with a thread, and a drilling tip (16; 46) which is disposed on the end of the screw shank (14) that is opposite the screw head (12), wherein the drilling tip (16; 46) is configured without a thread; wherein the drilling tip (16; 46) has two longitudinal cutters (18, 20; 48, 50) which continue up to a terminal point (22) of the drilling tip (16; 46); wherein the longitudinal cutters (18, 20; 48, 50) run so as to be curved in relation to a central longitudinal axis (24) of the wood screw (10); wherein a circumference of the drilling tip (16; 46) between the two longitudinal cutters (18, 20; 48, 50) does not have any further cutters, **characterized in that** the two longitudinal cutters (18, 20; 48, 50) run in a helical manner up to the terminal point (22) of the drilling tip (16; 46), and **in that** the drilling tip (16; 46), in sectional planes which run so as to be perpendicular to the central longitudinal axis (24) of the wood screw (10), at the transition to the thread initially has a circular cross section, and then up to the terminal point (22) has an S-type cross section, wherein the two corner points of the S-type cross section are defined by the longitudinal cutters (18, 20; 48, 50).

2. Wood screw according to Claim 1, **characterized in that** the longitudinal cutters (18, 20; 48, 50) run consistently and without interruptions and corners.

3. Wood screw according to Claim 1 or 2, **characterized in that** the longitudinal cutters (18, 20; 48, 50) continue across the entire length of the drilling tip (16; 46) up to the terminal point (22) of the latter.

4. Wood screw according to Claim 1, 2 or 3, **characterized in that** the longitudinal cutters (18, 20; 48, 50), when viewed in the circumferential direction and across the length (L) of the drilling tip (16; 46), run in each case across at most one quarter, in particular at most one half, of the circumference of the drilling tip (16; 46).

5. Wood screw according to at least one of the preceding claims, **characterized in that** the longitudinal cutters (18, 20; 48, 50) of the drilling tip (16; 46), when viewed in a direction perpendicular to the central longitudinal axis (24), proceeding from the terminal point (22) of the drilling tip (16; 46) have an inwardly curved contour.

6. Wood screw according to at least one of the preceding claims, **characterized in that** the longitudinal cutters (18, 20; 48, 50) of the drilling tip (16; 46), when viewed in a direction perpendicular to the central longitudinal axis (24), proceeding from the transition to the thread have an outwardly curved contour.

7. Wood screw according to Claims 5 and 6, **characterized in that** the outwardly curved contour of the longitudinal cutters (18, 20; 48, 50), proceeding from the thread to the terminal point (22) of the drilling tip (16; 46), transitions to the inwardly curved contour after one quarter, in particular one third, of the length of the drilling tip (16; 46).

8. Wood screw according to at least one of the preceding claims, **characterized in that** the longitudinal cutters (18, 20; 48, 50) at the terminal point (22) of the drilling tip (16; 46) enclose an angle of 20 degrees to 90 degrees, in particular 30 degrees to 60 degrees.

9. Wood screw according to Claim 8, **characterized in that** the angle enclosed by the longitudinal cutters (18, 20; 48, 50), proceeding from the terminal point (22) of the drilling tip (16; 46), remains substantially constant up to one quarter, in particular one third, of the length of the drilling tip (16; 46).

10. Wood screw according to at least one of the preceding claims, **characterized in that** the two longitudinal cutters (18, 20; 48, 50), at the shank-side end of the drilling tip (16; 46), in the radial direction have a mutual spacing which corresponds to the core diameter of the thread.

11. Method for producing a wood screw according to at least one of the preceding claims, **characterized by** producing a blank having a screw head (12) and a shank (14) which in the portion provided for the drilling tip (16; 46) is cylindrical; pinching the drilling tip (16; 46) by converging two pinching jaws while interposing the shank; and, subsequent to the pinching procedure, rolling a thread onto the shank (14).

12. Method according to Claim 11, **characterized by** removing a pinching burr when rolling the thread, said pinching burr containing material which in the pinching of the drilling tip (16; 46) is displaced to a region outside the drilling tip (16; 46).

## Revendications

1. Vis à bois (10) avec une tête de vis (12) avec une configuration d'entraînement, une tige de vis (14) partant de la tête de vis (12), qui est pourvue d'un filetage au moins par sections, et une pointe de perçage (16 ; 46) agencée à l'extrémité de la tige de vis (14) opposée à la tête de vis (12), la pointe de perçage (16 ; 46) étant configurée sans filetage, la pointe de perçage (16 ; 46) présentant deux tranchants longitudinaux (18, 20 ; 48, 50) qui s'étendent jusqu'à un point d'extrémité (22) de la pointe de perçage (16 ; 46), les tranchants longitudinaux (18, 20 ; 48, 50) s'étendant de manière incurvée par rapport à un axe longitudinal médian (24) de la vis à bois (10), une périphérie de la pointe de perçage (16 ; 46) ne présentant pas d'autres tranchants entre les deux tranchants longitudinaux (18, 20 ; 48, 50), **caractérisée en ce que** les deux tranchants longitudinaux (18, 20 ; 48, 50) s'étendent en hélice jusqu'au point d'extrémité (22) de la pointe de perçage (16 ; 46) et **en ce que** la pointe de perçage (16 ; 46) présente, dans des plans de coupe perpendiculaires à l'axe longitudinal médian (24) de la vis à bois (10), tout d'abord une section transversale circulaire à la transition vers le filetage, puis une section transversale en forme de S jusqu'au point d'extrémité (22), les deux coins de la section transversale en forme de S étant définis par les tranchants longitudinaux (18, 20 ; 48, 50).

2. Vis à bois selon la revendication 1, **caractérisée en ce que** les tranchants longitudinaux (18, 20 ; 48, 50) sont continus et sans interruptions ni coins.

3. Vis à bois selon la revendication 1 ou 2, **caractérisée en ce que** les tranchants longitudinaux (18, 20 ; 48, 50) s'étendent sur toute la longueur de la pointe de perçage (16 ; 46) jusqu'à son point d'extrémité (22).

4. Vis à bois selon la revendication 1, 2 ou 3, **caractérisée en ce que** les tranchants longitudinaux (18, 20 ; 48, 50), vus dans la direction périphérique et sur la longueur (L) de la pointe de perçage (16 ; 46), s'étendent chacun au maximum sur un quart, notamment au maximum sur une moitié de la périphérie de la pointe de perçage (16 ; 46).

5. Vis à bois selon au moins l'une quelconque des revendications précédentes, **caractérisée en ce que** les tranchants longitudinaux (18, 20 ; 48, 50) de la pointe de perçage (16 ; 46) présentent, vus dans une direction perpendiculaire à l'axe longitudinal médian (24), un contour incurvé vers l'intérieur en partant du point d'extrémité (22) de la pointe de perçage (16 ; 46).

6. Vis à bois selon au moins l'une quelconque des revendications précédentes, **caractérisée en ce que** les tranchants longitudinaux (18, 20 ; 48, 50) de la pointe de perçage (16 ; 46) présentent, vus dans une direction perpendiculaire à l'axe longitudinal médian (24), un contour incurvé vers l'extérieur en partant de la transition vers le filetage.

7. Vis à bois selon les revendications 5 et 6, **caractérisée en ce qu'**en partant du filetage vers le point d'extrémité (22) de la pointe de perçage (16 ; 46), le contour incurvé vers l'extérieur des tranchants longitudinaux (18, 20 ; 48, 50) se transforme en le contour incurvé vers l'intérieur après un quart, en particulier un tiers, de la longueur de la pointe de perçage (16 ; 46).

8. Vis à bois selon au moins l'une quelconque des revendications précédentes, **caractérisée en ce que** les tranchants longitudinaux (18, 20 ; 48, 50) forment un angle de 20 degrés à 90 degrés, notamment de 30 degrés à 60 degrés, au point d'extrémité (22) de la pointe de perçage (16 ; 46).

9. Vis à bois selon la revendication 8, **caractérisée en ce que** l'angle que forment les tranchants longitudinaux (18, 20 ; 48, 50), reste essentiellement constant en partant du point final (22) de la pointe de perçage (16 ; 46) jusqu'à un quart, notamment un tiers de la longueur de la pointe de perçage (16 ; 46).

10. Vis à bois selon au moins l'une quelconque des revendications précédentes, **caractérisée en ce qu'**à l'extrémité de la pointe de perçage (16 ; 46) située du côté de la tige, les deux tranchants longitudinaux (18, 20 ; 48, 50) présentent dans la direction radiale une distance l'un de l'autre qui correspond au diamètre de noyau du filetage.

11. Procédé de fabrication d'une vis à bois selon au moins l'une quelconque des revendications précédentes, **caractérisé par** la fabrication d'une ébauche avec une tête de vis (12) et une tige (14) qui est cylindrique dans la section prévue pour la pointe de perçage (16 ; 46), le pincement de la pointe de perçage (16 ; 46) par déplacement de deux mâchoires de pincement l'une vers l'autre avec interposition de la tige et, après l'opération de pincement, le laminage d'un filetage sur la tige (14).

12. Procédé selon la revendication 11, **caractérisé par** l'élimination, lors du laminage du filetage, d'une mèche de pincement qui contient de la matière déplacée lors du pincement de la pointe de perçage (16 ; 46) dans une zone à l'extérieur de la pointe de perçage (16 ; 46).
